# EUROPEAN PATENT APPLICATION

(11) **EP 1 909 064 A1**
(43) Date of publication of application: **09.04.2008**
(21) Application number: 06781214.9
(22) Date of filing: 12.07.2006
(51) Int. Cl.: G01C 3/06, B60R 1/00, B60R 21/00, G01S 13/86, G01S 13/93, G01V 8/10, G08G 1/16

(54) **OBJECT DETECTION DEVICE**

(30) Priority: 13.07.2005 JP 2005204656
(71) Applicant: Toyota Jidosha Kabushiki Kaisha, Toyota-shi, Aichi-ken, 471-8571 (JP)
(72) Inventor: TSUCHIDA, Jun c/o Toyota Jidosha Kabushiki Kaisha, Toyota-shi, Aichi; 4718571 (JP); TAKAGI, Yasuhiro c/o Toyota Jidosha K.K., Toyota-shi, Aichi; 4718571 (JP); SHIRAISHI, Tatsuya c/o Toyota Jidosha K.K., Toyota-shi, Aichi; 4718571 (JP)
(74) Representative: Röss, Walter Josef Alfred
(86) International application number: PCT/JP2006/314207
(87) International publication number: WO 2007/007906

(57) **Abstract**

An object detecting apparatus according to the present invention is an in-vehicle object detecting apparatus for detecting a distance equivalent (a distance itself, a disparity with stereo cameras, or the like) to an object, which comprises first detecting devices 2R, 2L for detecting a distance equivalent to an object; a second detecting device 3 for detecting a distance equivalent to an object by a detection principle different from that of the first detecting devices 2R, 2L; a determining device 4 for determining whether the first detecting devices 2R, 2L and the second detecting device 3 detected an identical object; and a judging device 4 for, when it is determined that an identical object was detected, judging whether the distance equivalent detected by the second detecting device 3 is to be used for evaluation of a detection error of the distance equivalent detected by the first detecting devices 2R, 2L.

## Description

### Technical Field

The present invention relates to an in-vehicle object detecting apparatus for detecting a distance equivalent (a distance itself, a disparity corresponding to the distance, or the like) to an object.

### Background Art

There are conventionally known object detecting apparatus for detecting a distance to an object by making use of a disparity, based on a plurality of input images, or, normally, a pair of images called stereo images, and Japanese Patent Application Laid-open No. 2001-272210 (referred to hereinafter as "Patent Document 1") also discloses one of them. The object detecting apparatus can have a deviation of the disparity (distance equivalent) due to secular change or the like. The apparatus described in Patent Document 1 is arranged to image a sample pattern with stereo cameras, to compare a disparity calculated by a search for congruent points on acquired stereo images (points indicating identical portions between the right image and the left image of the stereo images), with a disparity calculated based on a distance calculated from a size of the sample pattern, and to compensate for the deviation of the disparity of the stereo cameras.

### Disclosure of the Invention

However, since the apparatus described in Patent Document 1 performs the compensation using the fixed sample pattern, i.e., the sample with the predetermined size and installation distance, so-called online compensation is not available. The online compensation is a simultaneous compensation carried out during normal use of the stereo cameras. If the online compensation were performed with the apparatus described in Patent Document 1, correct compensation could not be made with use of all the detection results in which data with low detection accuracy is mixed. Therefore, an object of the present invention is to provide an object detecting apparatus capable of accurately compensating for the distance equivalent online.

The invention as set forth in claim 1 is an in-vehicle object detecting apparatus for detecting a distance equivalent to an object, which comprises: first detecting means for detecting a distance equivalent to an object; second detecting means for detecting a distance equivalent to an object by a detection principle different from that of the first detecting means; determining means for determining whether the first detecting means and the second detecting means detected an identical object; and judging means for, when it is determined that an identical object was detected, judging whether the distance equivalent detected by the second detecting means is to be used for evaluation of a detection error of the distance equivalent detected by the first detecting means.

Since the object detecting apparatus as set forth in claim 1 is allowed to compare the distance equivalents with use of only data supposed to represent correctly measured distances, among data assumed to be detected form an identical object, the apparatus is able to determine deviation accurately and to make compensation for abnormal judgment and deviation, without making a judgment with a special condition and device.

The invention as set forth in claim 2 is the object detecting apparatus according to claim 1, wherein the judging means makes a judgment that the distance equivalent detected by the second detecting means is to be used for the evaluation, if a detection frequency of the identical object by the second detecting means is high.

The object detecting apparatus as set forth in claim 2 is able to make the compensation for abnormal judgment and deviation if the detection frequency is high.

The invention as set forth in claim 3 is the object detecting apparatus according to claim 1, wherein the judging means makes a judgment that the distance equivalent detected by the second detecting means is to be used for the evaluation, if the distance equivalent to the identical object detected by the first detecting means or the second detecting means is within a predetermined range.

Since the object detecting apparatus as set forth in claim 3 is so arranged that each detecting means has the detection range, the distance detection accuracy can be improved in the detection range.

The invention as set forth in claim 4 is the object detecting apparatus according to claim 1, wherein the predetermined range is a range excluding a near or far range of the distance equivalent.

The object detecting apparatus as set forth in claim 4 is arranged to use only data in the range of 20 m to 40 m in the case of stereo camera sensors. If the compensation is made with data in the nearer range than the detection range, the detection result will deviate in the detection range; and no compensation is needed in the farther range than the detection range because the detection result of the stereo cameras is not used.

The invention as set forth in claim 5 is the object detecting apparatus according to claim 1, comprising running stability determining means for determining whether a running state of the vehicle is a stable running state, wherein the judging means makes a judgment that the distance equivalent detected by the second detecting means is to be used for the evaluation, if it is determined that the running state of the vehicle is the stable running state.

Since the object detecting apparatus as set forth in claim 5 is arranged to make the judgment in the stable running state, it is able to make the accurate judgment.

The invention as set forth in claim 6 is the object detecting apparatus according to claim 5, wherein the running stability determining means determines that the running state of the vehicle is the stable running state, if the vehicle is parked or running at high speed.

The object detecting apparatus as set forth in claim 6, specifically, uses data at (vehicle speed 0 km/h) or at (40 km/h or higher). An object can be stably detected at extremely low speed, but in the range of 0 km/h to 40 km/h, an object might not be stably detected with possibilities that an object to be detected is lost and that an object moves to an edge of a screen, e.g., during running on city roads or turning in roads at intersections, and thus such data is not used. On the other hand, it can be expected that when the vehicle speed is not less than 40 km/h, this state will continue for a while with high possibilities, and the detection result in that range is adopted as data, which permits the compensation for abnormal judgment and deviation.

The invention as set forth in claim 7 is the object detecting apparatus according to claim 5, wherein the running stability determining means determines that the running state of the vehicle is the stable running state, if the vehicle is running on a straight road or on a flat road.

The object detecting apparatus as set forth in claim 7 is able to acquire stable data because the object is unlikely to move to an edge of the detection range where the detection accuracy is poor.

The invention as set forth in claim 8 is the object detecting apparatus according to claim 5, wherein the running stability determining means determines that the running state of the vehicle is not the stable running state, if the vehicle is running on a city road.

Since the object detecting apparatus as set forth in claim 8 does not use the detection result during running on a city street where the detection accuracy is poor, it is able to acquire only stable data during running on roads except for city roads. Claims 5, 7, and 8 allow the determination to be made using external information such as navigation information. Furthermore, if the vehicle has a large acceleration or deceleration, it may be determined that the vehicle is not in the stable running state.

The invention as set forth in claim 9 is the object detecting apparatus according to claim 1, wherein the first detecting means or the second detecting means detects a relative lateral position which is a lateral position of an object to the vehicle and wherein the judging means makes a judgment that the distance equivalent detected by the second detecting means is to be used for the evaluation, if the relative lateral position of the identical object is within a predetermined range.

Since the object detecting apparatus as set forth in claim 9 does not adopt data from the edge of the detection range where the relative lateral position is displaced and where the detection accuracy is poor, it is able to perform the compensation for abnormal judgment and deviation.

The invention as set forth in claim 10 is the object detecting apparatus according to claim 1, wherein the judging means judges whether the distance equivalent detected by the second detecting means is to be used for the evaluation, based on a weather condition or a brightness level in a running environment of the vehicle.

Since the object detecting apparatus as set forth in claim 10 does not adopt data in an environment where the weather condition is rain or whether the brightness level is dark, because of low detection accuracy, it is able to make the compensation for abnormal judgment and deviation.

The invention as set forth in claim 11 is the object detecting apparatus according to any one of claims 1 to 10, wherein when it is judged that there is a deviation between the distance equivalents detected by the first and second detecting means, the distance equivalent by the first detecting means is compensated based on the distance equivalent by the second detecting means.

Since the object detecting apparatus as set forth in claim 11 is arranged to use the detection result with one detecting means to make the compensation for the detection result with the other detecting means, it is able to make the compensation for abnormal judgment and deviation. The apparatus may also be arranged to inform a user of anomaly when it is determined that there is a deviation.

The invention as set forth in claim 12 is the object detecting apparatus according to any one of claims 1 to 11, wherein the first detecting means is an image ranging sensor using images with a plurality of imaging means and wherein the second detecting means is a millimeter-wave ranging sensor using a millimeter wave.

In the object detecting apparatus as set forth in claim 12, the result of the disparity with the stereo cameras differs depending upon mounting and deviation is likely to occur because of poor required mounting accuracy. On the other hand, the millimeter wave permits stable and correct distance calculation when compared with the stereo cameras. Therefore, it becomes feasible to implement the abnormal judgment and compensation for the detection result of the stereo cameras, based on the detection result of the millimeter wave.

The determination and judgment in claims 2 to 10 are independent determinations, and thus they may be arbitrarily combined.

### Brief Description of the Drawings

Fig. 1 is a configuration diagram of a vehicle in which an embodiment of the object detecting apparatus of the present invention is mounted.
Fig. 2 is a flowchart of compensation control (first half).
Fig. 3 is a flowchart of compensation control (second half).
Fig. 4 is a data distribution where the vertical axis represents differences between distances detected with stereo cameras and distances detected with a millimeter-wave sensor and the horizontal axis represents distances L between an object to be detected, and a vehicle.
Fig. 5 is a drawing resulting from transformation of the vertical axis in Fig. 4 into disparities (pixel counts) in stereo images.

### Best Mode for Carrying out the Invention

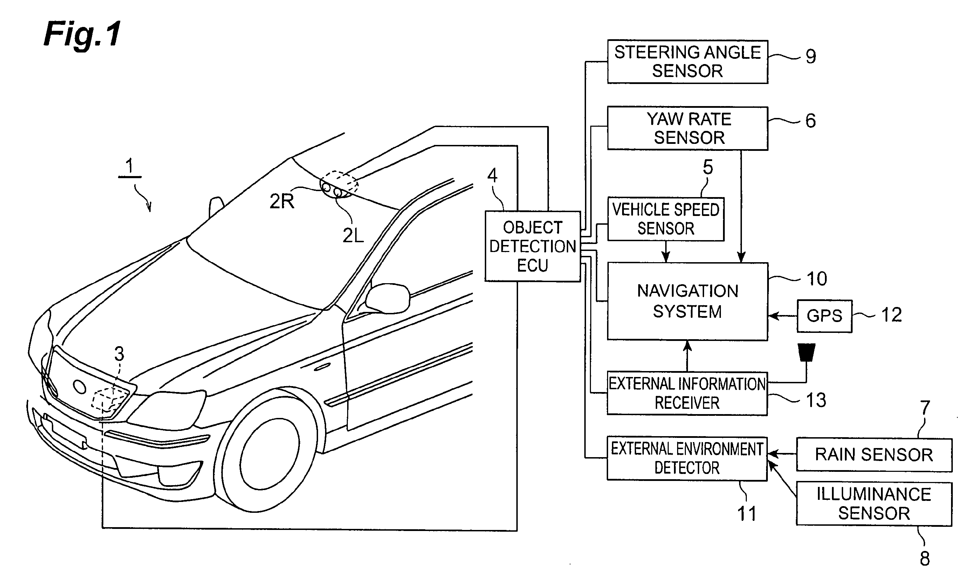

An embodiment of the object detecting apparatus according to the present invention will be described below with reference to the drawings. The object detecting apparatus of the present embodiment is mounted in a vehicle 1, as shown in Fig. 1. The object detecting apparatus is provided with image acquiring units (imaging means) 2R, 2L, a millimeter-wave sensor (millimeter-wave radar: second detecting means) 3, and a processing unit (judging means and running stability determining means) for processing images acquired by the imaging means 2R, 2L, by various filters and for processing the result of detection by the millimeter-wave sensor 3. The imaging means 2R, 2L are a pair of CCD cameras (first detecting means: image ranging sensor: stereo cameras) arranged with a predetermined spacing in a lateral direction. The processing unit performs various calculations based on a pair of input images acquired by the CCD cameras 2R, 2L and is an object detection ECU 4 comprised of CPU and GPU, ROM and RAM, and so on.

The pair of CCD cameras 2R, 2L are buried in the back of a rearview mirror in a vehicle interior of vehicle 1. The pair of CCD cameras 2R, 2L have the same performance and specification and their installation spacing, focal length, etc. are preliminarily stored, for example, in the ROM in the object detection ECU 4. The optical axes of the pair of CCD cameras 2R, 2L are normally arranged in parallel with a road surface when the vehicle 1 is located on a flat road. The optical axes of the pair of CCD cameras 2R, 2L are normally parallel to each other and also parallel to a longitudinal center line of the vehicle 1.

The millimeter-wave sensor 3 radiates a millimeter wave forward from the vehicle 1 and detects a distance to an object ahead the vehicle 1 by making use of reflection thereof. Although not shown, the following sensors are also connected to the object detection ECU 4: vehicle speed sensor 5 for detecting a vehicle running state or a running environment, yaw rate sensor 6, acceleration/deceleration sensors (vertical and longitudinal), rain sensor 7 for detecting whether it is raining, illuminance (brightness) sensor 8 for detecting brightness inside and outside the vehicle, steering angle sensor 9 for detecting a steering angle of a steering wheel, and navigation system 10. The rain sensor 7 and the illuminance sensor 8 are connected through an external environment detecting device 11 to the object detection ECU 4. Furthermore, the navigation system 10 is equipped with GPS 12 and is also connected to an external information receiving device 13 for receiving external information through communication. The external information receiving device 13 is also connected directly to the object detection ECU 4.

For detecting an object by the CCD cameras 2R, 2L (stereo cameras), the pair of CCD cameras 2R, 2L first acquire forward images. Since the pair of CCD cameras 2R, 2L are arranged with the predetermined spacing, the pair of images captured are not completely identical images, and there appears a deviation corresponding to so-called binocular disparity between the two images (this deviation will also be referred to as disparity). Specifically, a disparity about points indicating the same location on the two images (this pair of points will be called congruent points) differs according to directions and distances from the CCD cameras 2R, 2L. Therefore, coordinates on an actual three-dimensional space (i.e., on three-dimensional coordinate axes corresponding thereto), i.e., a distance from the vehicle 1 can be calculated from the positions on the images (coordinates on two-dimensional coordinate axes: one of the left and right images is normally used as a reference) and the disparity.

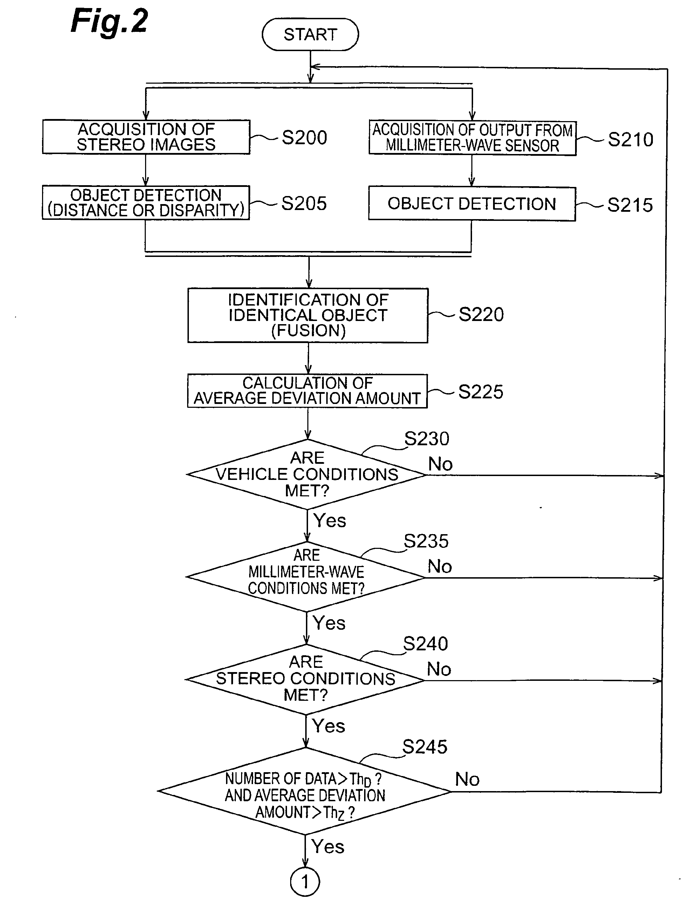

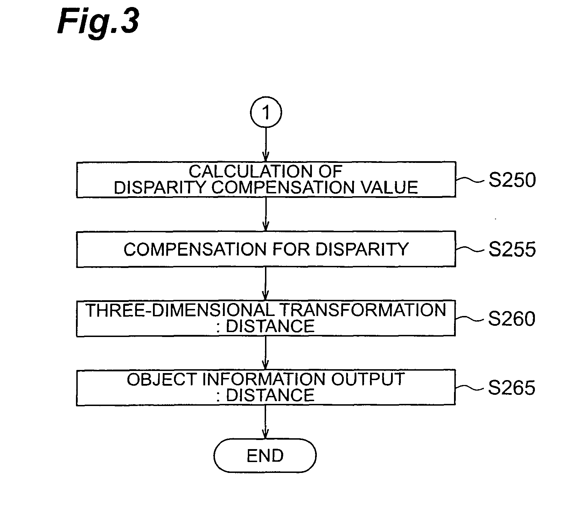

A control on compensation for a detection error due to secular change or the like of the CCD cameras 2R, 2L (and control on detection of distance to the object thereafter) by the object detecting apparatus of the present embodiment will be described with reference to the flowchart of Fig. 2 and Fig. 3. First, stereo images are acquired by the CCD cameras 2R, 2L (step 200). Then the object detection ECU 4 detects an object (which is also sometimes called a target), based on the acquired stereo images (step 205). The detection of the object with the stereo images is as described above. In this object detection, a distance to the object may be calculated as a distance itself, or a disparity corresponding to the distance may be used as it is.

In parallel with the steps 200, 205, the millimeter-wave sensor 3 scans the space in front of the vehicle 1 to acquire an output thereof (step 210). The object detection ECU 4 detects an object, based on the output result (step 215). After the steps 205, 215, an object assumed to be identical is identified (or recognized) among objects detected with the CCD cameras 2R, 2L and objects detected with the millimeter-wave sensor 3 (step 220). This step is also called fusion.

After completion of the fusion, a comparison is made between the detection result with the CCD cameras 2R, 2L and the detection result with the millimeter-wave sensor 3 about an identical object to calculate an average deviation amount of the CCD cameras 2R, 2L (step 225). After the step 225, it is first determined whether vehicle conditions are met (step 230). The vehicle conditions are conditions for indicating that a state of the vehicle 1 is suitable for execution of compensation, i.e., that motion of the vehicle 1 is stable (a state in which the object detection can be performed on a stable basis with both of the stereo images and the millimeter wave).

Specifically, one of the vehicle conditions is whether the vehicle speed (detected by the vehicle speed sensor 5) is a predetermined speed. The condition herein is whether the vehicle speed is zero, or whether the vehicle speed is within a predetermined range [threshold Th_{L1} < vehicle speed V < Th_{H}] which indicates that the vehicle is running at some high speed (because a driver's steering manipulation amount is small in the high speed range). For example, Th_{L1} = 40 km/h and Th_{H} = 100 km/h. Another vehicle condition is whether a relation of |curve R| > threshold Th_{C} is satisfied. The curve R can be detected by detecting white lines from the acquired images of the CCD cameras 2R, 2L or can be calculated from the detection result of the yaw rate sensor or the steering angle sensor. The reason is that the driver's steering manipulation is small if the curve R is large (or if the vehicle 1 is running on a straight road).

Another condition of the vehicle conditions is that |pitch variation| of vehicle 1 < threshold Th_{P}. That the pitch variation is small means that the vehicle is running on a flat road, and this situation can be said to be suitable for compensation. The pitch variation of vehicle 1 can be detected by detecting white lines from the acquired images of the CCD cameras 2R, 2L and measuring vertical motion of an intersecting position between extensions of the left and right white lines, or can be calculated from the detection result of the pitching sensor or suspension stroke sensors, the vertical acceleration sensor, or the like. When all the three conditions described above are satisfied, the vehicle conditions are met. When the vehicle conditions are not met, the flow returns to the start in the flowchart of Fig. 2.

On the other hand, when the vehicle conditions are met, it is then determined whether millimeter-wave conditions are met (step 235). The millimeter-wave conditions are conditions for indicating that the vehicle is in a state in which a distance to an object can be accurately detected by the millimeter-wave sensor 3. One of the conditions is whether |lateral position coordinate| of vehicle 1 < threshold Th_{W}. The reason is that the accuracy of detected distance becomes higher as the object is located nearer to the exact front of the vehicle 1. The origin of the vehicle lateral position is a lane center and a representative point of the vehicle 1 is a lateral center thereof. The necessary condition is that the vehicle 1 is located in a lane determined by the left and right white lines. This can be judged by detecting white lines from the acquired images of the CCD cameras 2R, 2L and determining whether the vehicle is in a lane.

Another millimeter-wave condition is whether a running lane probability > threshold Th_{J}. The running lane probability (detection frequency) is a probability to indicate how long a forward object is located in a running lane and continuously. It can be said that the detection accuracy with the millimeter-wave sensor 3 becomes higher as this running lane probability increases. Still another millimeter-wave condition is whether |relative speed| to a forward object < threshold Th_{R}. It can be said that the detection accuracy with the millimeter-wave sensor 3 becomes higher as the magnitude of the relative speed decreases.

Another millimeter-wave condition is whether a sensitivity threshold of the millimeter-wave sensor 3 is a high threshold. Usually, a millimeter-wave sensor uses both a high threshold and a low threshold as a sensitivity threshold used in detection of reflection depending upon objects. The high threshold is one used in detection of objects with high reflectance such as vehicles and steel sheets, and the low threshold is one used in detection of objects with low reflectance such as pedestrians. When the object detection with high accuracy is carried out using the high threshold, one of the millimeter-wave conditions is met herein.

Another millimeter-wave condition is that data is not so-called extrapolated data. A forward object is continuously detected, but a detection failure can occur in only one (or two or more) out of consecutive detections, depending upon some conditions. In this case, data of one detection failure (or two or more detection failures) is sometimes supplemented based on data before and after it. This supplementation is referred to as extrapolation. One of the millimeter-wave conditions is met when data used for compensation is not extrapolated data. When all of the five conditions described above are satisfied, the millimeter-wave conditions are met. When the millimeter-wave conditions are not met, the flow returns to the start in the flowchart of Fig. 2.

When the millimeter-wave conditions are met, it is then determined whether stereo conditions are met (step 240). The stereo conditions are conditions for indicating that the vehicle is in a state in which a distance to an object can be accurately detected with the stereo images. One of the conditions is whether the distance detected in step 205 (or the distance corresponding to the disparity) is in a predetermined range [threshold Th_{L2} < vehicle speed V < Th_{U}]. If an object is located too near, the object might exist only in one of the stereo images and thus the accuracy becomes poor. Since the accuracy is also poor in a too near range (e.g., less than 5 m) with the millimeter-wave sensor 3, the stereo condition also includes this condition for the millimeter-wave sensor 3. On the other hand, there is a limit to the detectable distance to the object with the stereo images, and this limit is defined as the upper limit Th_{U}. For example, Th_{L2} = 5 m and Th_{U} = 40 m.

Another stereo condition is whether |lateral position coordinate| of vehicle 1 < threshold Th_{W}, similar to one of the aforementioned millimeter-wave conditions. The origin of the vehicle lateral position is a lane center and a representative point of the vehicle 1 is a lateral center thereof. The necessary condition is that the vehicle 1 is located in a lane determined by left and right white lines. The reason is that the accuracy of detected distance becomes higher as the vehicle 1 is located nearer to the exact front of the vehicle 1. When the two conditions described above are satisfied, the stereo conditions are met. When the stereo conditions are not met, the flow returns to the start in the flowchart of Fig. 2.

When the step 240 ends in the affirmative, it is determined whether the number of detected data is not less than a predetermined data number Th_{D} and whether the average deviation amount calculated in step 225 is larger than a predetermined threshold Th_{z} (step 245). This step is defined as follows: a certain number of data is needed because reliability is poor with a small number of data; and no compensation is needed if a deviation amount is small.

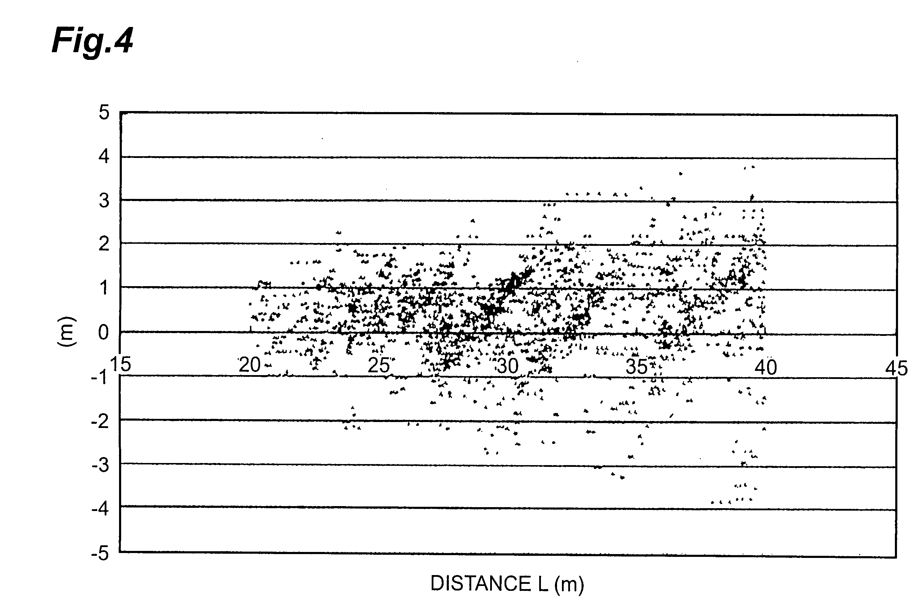

After the step 245, a disparity compensation value is calculated (step 250). Fig. 4 shows a data distribution, where the vertical axis represents differences between distances detected with the stereo cameras 2R, 2L and distances detected with the millimeter-wave sensor 3 and the horizontal axis represents distances L between an object to be detected, and the vehicle 1. These pieces of data were obtained by preparing a plurality of vehicles 1 (with different settings of stereo cameras 2R, 2L due to secular change or the like) and plotting their measurement results on the graph. The data was obtained in the range of 20 [m] < L < 40 [m].

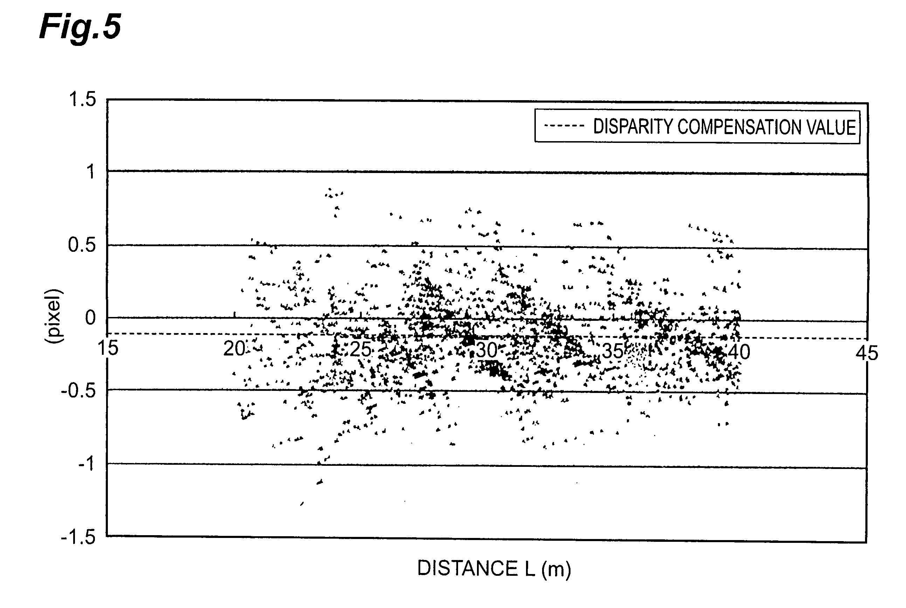

It is apparent from Fig. 4 that the differences between the detected distances with the stereo cameras 2R, 2L and the detected distances with the millimeter-wave sensor 3 become larger (or are scattered) with increase in the distance from the vehicle 1. In contrast to it, Fig. 5 shows a graph obtained by converting the vertical axis of Fig. 4 into disparities (pixel counts) in the stereo images. It is apparent from Fig. 5 that with the disparities, the differences between the detected disparities with the stereo cameras 2R, 2L and the detected distances with the millimeter-wave sensor 3 fall within a virtually constant range, in the entire range (20 [m] < L < 40 [m]). This is also apparent from the following fact: for example, supposing the disparity is two pixels, the error becomes smaller as the distance to the object decreases, whereas the error becomes larger as the distance to the object increases.

For this reason, as shown in Fig. 5, an average is calculated from all the data about the disparities and this is used as a disparity compensation value (a dotted line in Fig. 5). The accuracy of the detection result with the millimeter-wave sensor 3 is higher than that with the stereo cameras 2R, 2L. Therefore, this disparity compensation value is added to the detection result (disparity: distance equivalent) with the stereo cameras 2R, 2L (if it is negative the disparity compensation value is subtracted from the detection result), whereby the detection result with the stereo cameras 2R, 2L can be corrected (step 255). The distance to the object is finally calculated by three-dimensional transformation using a disparity compensated with the disparity compensation value (step 260), and it is outputted (step 265).

The present invention is not limited to the above-described embodiment. For example, the weather or brightness in a running environment of vehicle 1 may be added as a condition, to the conditions in the steps 230-240 in the flowchart of Figs. 2 and 3 in the foregoing embodiment. Since the accuracy of detection with the stereo cameras 2R, 2L (or with the millimeter-wave sensor 3) becomes lower in a raining condition (detected with the rain sensor 7), the compensation (evaluation of deviation) is not made. If the brightness around the vehicle 1 is dark (detected with the illuminance sensor 8), the detection accuracy of the stereo cameras 2R, 2L becomes lower and thus the compensation is not made. As another condition, the apparatus may also be configured so that the compensation (evaluation of deviation) is not made if it is determined that the vehicle 1 is running on a city street, by means of the navigation system 10. It is because the running state of the vehicle is less likely to be stable during running on a city street.

## Claims

1. An in-vehicle object detecting apparatus for detecting a distance equivalent to an object, comprising:
first detecting means for detecting a distance equivalent to an object;
second detecting means for detecting a distance equivalent to an object by a detection principle different from that of the first detecting means;
determining means for determining whether the first detecting means and the second detecting means detected an identical object; and
judging means for, when it is determined that an identical object was detected, judging whether the distance equivalent detected by the second detecting means is to be used for evaluation of a detection error of the distance equivalent detected by the first detecting means.

2. The object detecting apparatus according to claim 1,
wherein the judging means makes a judgment that the distance equivalent detected by the second detecting means is to be used for the evaluation, if a detection frequency of the identical object by the second detecting means is high.

3. The object detecting apparatus according to claim 1,
wherein the judging means makes a judgment that the distance equivalent detected by the second detecting means is to be used for the evaluation, if the distance equivalent to the identical object detected by the first detecting means or the second detecting means is within a predetermined range.

4. The object detecting apparatus according to claim 3,
wherein the predetermined range is a range excluding a near or far range of the distance equivalent.

5. The object detecting apparatus according to claim 1, comprising running stability determining means for determining whether a running state of the vehicle is a stable running state,
wherein the judging means makes a judgment that the distance equivalent detected by the second detecting means is to be used for the evaluation, if it is determined that the running state of the vehicle is the stable running state.

6. The object detecting apparatus according to claim 5,
wherein the running stability determining means determines that the running state of the vehicle is the stable running state, if the vehicle is parked or running at high speed.

7. The object detecting apparatus according to claim 5,
wherein the running stability determining means determines that the running state of the vehicle is the stable running state, if the vehicle is running on a straight road or on a flat road.

8. The object detecting apparatus according to claim 5,
wherein the running stability determining means determines that the running state of the vehicle is not the stable running state, if the vehicle is running on a city road.

9. The object detecting apparatus according to claim 1,
wherein the first detecting means or the second detecting means detects a relative lateral position which is a lateral position of an object to the vehicle and wherein the judging means makes a judgment that the distance equivalent detected by the second detecting means is to be used for the evaluation, if the relative lateral position of the identical object is within a predetermined range.

10. The object detecting apparatus according to claim 1,
wherein the judging means judges whether the distance equivalent detected by the second detecting means is to be used for the evaluation, based on a weather condition or a brightness level in a running environment of the vehicle.

11. The object detecting apparatus according to any one of claims 1 to 10, wherein when it is judged that there is a deviation between the distance equivalents detected by the first and second detecting means, the distance equivalent by the first detecting means is compensated based on the distance equivalent by the second detecting means.

12. The object detecting apparatus according to any one of claims 1 to 11, wherein the first detecting means is an image ranging sensor using images with a plurality of imaging means and wherein the second detecting means is a millimeter-wave ranging sensor using a millimeter wave.
